(19) Europäisches Patentamt
European Patent Office
Office européen des brevets

(11) **EP 1 558 014 B1**

(12) **FASCICULE DE BREVET EUROPEEN**

(45) Date de publication et mention
de la délivrance du brevet:
**24.03.2010 Bulletin 2010/12**

(51) Int Cl.:
**H04M 11/06** *(2006.01)*

(21) Numéro de dépôt: **04300950.5**

(22) Date de dépôt: **23.12.2004**

(54) **Filtre ADSL**

ADSL filter

ADSL filter

(84) Etats contractants désignés:
**AT BE BG CH CY CZ DE DK EE ES FI FR GB GR
HU IE IS IT LI LT LU MC NL PL PT RO SE SI SK TR**

(30) Priorité: **05.01.2004 FR 0450009**

(43) Date de publication de la demande:
**27.07.2005 Bulletin 2005/30**

(73) Titulaire: **Laboratoire Europeen ADSL Leacom
Fastnet
92400 Courbevoie (FR)**

(72) Inventeur: **Fernandez, Thierry
92400 Courbevoie (FR)**

(74) Mandataire: **Camus, Olivier Jean-Claude
SCHMIT CHRETIEN
8, place du Ponceau
95000 Cergy (FR)**

(56) Documents cités:
**WO-A-00/48314      WO-A-99/40716**

**Description**

La présente invention a pour objet un dispositif de filtrage intervenant dans le découplage des voies ADSL (Asymetric Digital Subscriber Line, en anglais, pour ligne d'abonné numérique à débit asymétrique). Plus précisément, l'invention a pour but de limiter des contraintes en courant imposées à des composants de tels dispositifs. En limitant ces contraintes, l'invention permet de réduire l'encombrement et le coût de ces dispositifs. Le filtre selon l'invention est destiné à être incorporé dans un dispositif séparateur de signaux voix-données pour une transmission sur des voies ADSL.

La technologie ADSL est essentiellement mise en oeuvre sur des boucles locales des réseaux de téléphonie existant, la boucle locale étant constituée par des intermédiaires du réseau entre un central téléphonique et un poste d'abonné. La technologie ADSL permet de faire circuler sur un même support filaire des signaux basses fréquences utilisés par le service téléphonique et des signaux hautes fréquences utilisés pour la transmission de données à haut débit.

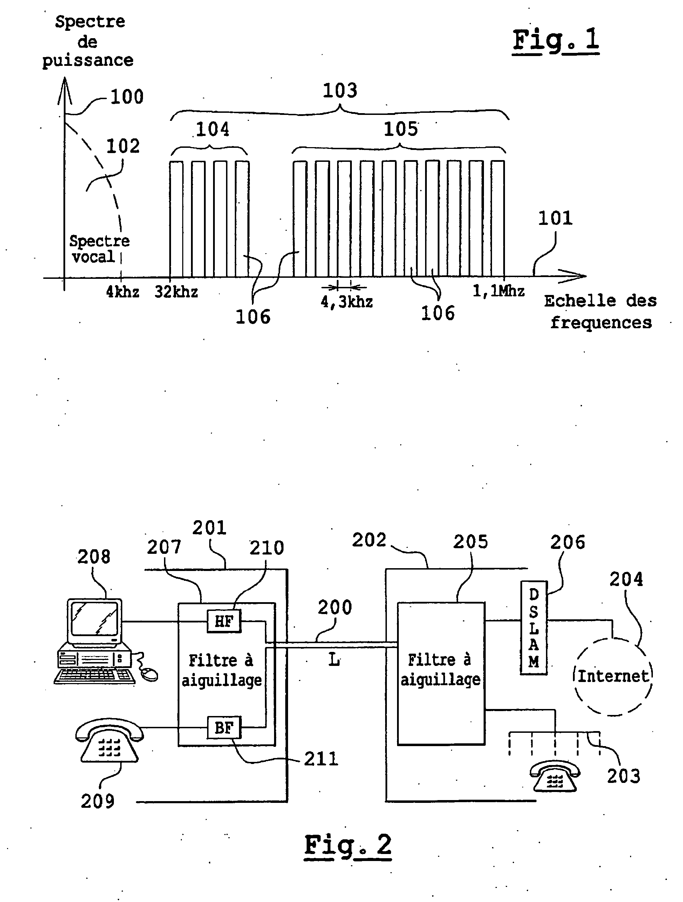

La figure 1 illustre l'exploitation de la bande de fréquence en distribution ADSL. L'axe des ordonnées 100 échelonne la puissance des signaux émis, et l'axe des abscisses 101 donne l'échelle des fréquences. Les puissances émises sont représentées de façon équirépartie dans un but de simplification. Un spectre vocal 102 s'étend de 0 à 4 kHz, et un spectre 103 utilisé pour la transmission de données selon la technologie ADSL, ce dernier s'étendant d'environ 30 kHz à 1,1 MHz. Les signaux ayant une fréquence appartenant au spectre 103 sont désignés comme signaux ADSL.

Le spectre 103 est divisé en deux parties principales : une première bande de fréquence 104 correspondant au spectre utilisé pour les données montantes (de l'abonné vers le central) et une deuxième bande de fréquence 105 correspondant au spectre utilisé pour les données descendantes (du central vers l'abonné). La deuxième bande de fréquence 105 est plus large que la première bande de fréquence 104 car les données montantes, qui correspondent le plus souvent à des requêtes émises par un abonné, ont des débits plus faibles que les données descendantes ; ces dernières correspondant par exemple, au téléchargement de gros fichiers, d'images, ou autres .

L'utilisation d'une ligne dite ADSL nécessite donc de séparer la bande de base, basse fréquence, de la bande haute fréquence. La figure 2 illustre schématiquement ces séparations au niveau d'une boucle locale de communication. Sur cette figure, on a représenté une ligne téléphonique usuelle 200, ou boucle d'abonné, composée d'une première connexion transmission et d'une deuxième connexion, qui assure la liaison entre un abonné 201 et un central téléphonique 202.

Le central téléphonique 202 assure la connexion à un réseau de téléphonie classique 203 et à un réseau de type Internet 204. Afin de dissocier les signaux destinés au réseau téléphonique 203 et au réseau Internet 204, un premier dispositif 205 séparateur de signaux voix-données, également appelé filtre à aiguillage ou splitter, est utilisé. Le splitter 205 sera désigné par la suite comme splitter central.

Le splitter central comporte notamment un filtre basse fréquence qui permet d'éviter que les signaux phoniques destinés au - ou provenant du - réseau téléphonique 203 soient perturbés par les signaux destinés au - ou provenant du - réseau Internet 204. Ce filtre permet également d'éviter que les signaux haute-fréquence destinés au - ou provenant du - réseau Internet 204 soient perturbés par les signaux de téléphonie destinés au - ou provenant du - réseau téléphonique 203. Les données destinées au - ou provenant du - réseau Internet 204 transitent par un multiplexeur d'accès DSL 206, appelé DSLAM (pour Digital Subscriber Line Access Multiplexer en anglais), qui est relié au splitter central 205.

Du côté de l'abonné 201, un splitter 207 est aussi relié à la ligne téléphonique 200. Le splitter 207 est appelé splitter maître. Le splitter maître 207 a pour fonction de séparer, côté abonné, les signaux de données, qui sont orientés vers un ordinateur personnel 208 associé à un modem ADSL, et les signaux de voix, qui sont orientés vers des combinés téléphoniques classiques 209. Chaque téléphone 209 connecté à la même ligne 200 doit être protégé par un filtre passe-bas contenu dans le splitter 207.

En théorie, on trouve également dans le splitter maître 207 un filtre haute fréquence, qui laisse passer les signaux ADSL. Dans la pratique, le filtre basse fréquence du splitter 207 et le filtre haute fréquence sont séparés et distincts. Le filtre haute fréquence, c'est à dire le filtre qui laisse passer les signaux de données et uniquement ceux-là, est disposé, côté abonné, entre la ligne téléphonique 200 et l'ordinateur personnel 208. Le filtre haute fréquence peut être incorporé, partiellement ou totalement, dans un modem ADSL. Le filtre basse fréquence est, pour sa part, disposé côté abonné entre la ligne téléphonique 200 et chaque combiné téléphonique classique 209. Le filtre basse fréquence sert à empêcher que les signaux phoniques soient perturbés par les signaux de données.

L'objet de l'invention est la réalisation d'un filtre basse fréquence tel que le filtre 211 ou le filtre basse fréquence disposé dans le splitter 205.

On connaît des filtres passifs qui comportent des composants magnétiques, tels que des bobines ou des transformateurs, connectés en série sur la ligne téléphonique. En général, ces filtre sont disposés du côté de la central téléphonique. Ces filtres fonctionnent de manière correcte. Toutefois, l'intensité élevée des courants sur la ligne imposent de forte contraintes sur les composants électroniques du filtre placés en série sur cette ligne. Ainsi, la taille des composants magnétiques, pour une valeur donnée, dépend directement du courant continu qui les traverse.

Le nombre de composants de ces filtres passifs est imposé par des caractéristiques de filtres listées dans les différents standards internationaux, tels que les standards ETSI, ANSI, ITU ou MII. Typiquement, les performances que ces filtres doivent atteindre demandent l'utilisation de deux ou trois bobines en série sur la ligne. Ce nombre de bobines rend très difficile la réduction de l'encombrement, du poids et du coût de ces filtres passifs.

On connaît aussi les filtres actifs qui comportent notamment des amplificateurs opérationnels et qui sont placés en série sur la ligne téléphonique. Dans une réalisation particulière, deux filtres actifs sont connectés en série sur deux connexions de la ligne téléphonique. Les performances de filtrage de ces filtres sont relativement bonnes mais leur prix et leur encombrement ne sont pas aussi faibles que souhaité.

En effet, des fortes différences de potentiel pouvant exister entre deux conducteurs d'une ligne téléphonique, de l'ordre de 50V CC ou de plus de 90 V AC en cas de sonnerie, ne sont pas compatibles avec les technologies des circuits intégrés les plus répandus sur le marché. Aussi, les prix des composants des filtres actifs connus adaptés à des conditions de fonctionnement particulières sont largement supérieurs au prix du marché.

Par ailleurs, les intensités des courants circulant sur la ligne téléphonique sont très élevées, pouvant atteindre 400mA lorsque l'utilisateur décroche son combiné pendant une sonnerie. Ces courants ont un caractère transitoire, c'est à dire qu'ils présentent des pics, et rendent difficile la réalisation de filtres actifs compacts.

La présente invention a pour objet de résoudre ce problème de réalisation de filtres compacts en disposant un dispositif de filtrage, de manière à ce que les contraintes en courant et en tension imposées aux composants du dispositif soient limitées.

A cet effet, un dispositif de filtrage selon l'invention comportant notamment un filtre actif est connecté en parallèle avec la ligne téléphonique, entre un coupleur ADSL et un ensemble de circuits de commutation. Ce dispositif de couplage permet ainsi d'utiliser un filtre actif sans que ce dernier ne soit traversé par des courants ou n'ait à supporter les tensions présents sur la ligne téléphonique.

Plus précisément, le filtre actif est connecté aux bornes d'une résistance qui est connectée en série avec une connexion de la ligne téléphonique. Le signal de tension prélevé aux bornes de cette résistance est l'image d'un courant circulant dans les connexions de la ligne. Ce signal de tension possède une faible amplitude et permet donc une utilisation de composants usuels et peu onéreux qui possèdent un faible encombrement.

Après avoir été traité par ce filtre actif, le signal de tension est appliqué aux bornes d'une bobine de couplage, elle-même couplée à un transformateur relié aux connexions de la ligne. Le dispositif de filtrage selon l'invention assure ainsi un couplage entre le filtre et la ligne téléphonique. Le signal injecté par ce couplage permet d'atténuer les hautes-fréquences.

Deux condensateurs sont connectés aux bornes de la résistance de manière à isoler la ligne téléphonique du dispositif de filtrage. Ainsi, dans le cadre de l'invention, une alimentation utilisée pour alimenter le filtre actif peut être distincte et indépendante de la ligne téléphonique. Cette indépendance des alimentations permet d'alimenter le filtre et ses composants avec des tensions et des courants beaucoup plus faibles que les tensions et les courants présents sur la ligne.

Les documents WO00/48314 et WO99/40716 décrivent des filtres reliés entre un premier jeu de connexions reliées à un abonné et un deuxième jeu de connexions reliées à un ensemble de circuits de commutation. Toutefois, contrairement à l'invention, ces filtres ne comportent notamment pas de moyen pour prélever un signal de tension correspondant à un courant circulant sur une des connexions du premier jeu. Contrairement à l'invention, les filtres ne permettent donc pas de limiter les courants les traversant afin de limiter la taille des composants qu'ils utilisent.

L'invention concerne donc un dispositif de filtrage installé, dans un central, sur une ligne téléphonique entre un branchement d'un coupleur ADSL à cette ligne et un ensemble de circuits de commutation de ce central, comprenant

- un premier jeu de connexions reliées au coupleur et à une ligne d'abonné et
- un deuxième jeu de connexions reliées à l'ensemble de circuits de commutation,
- un filtre interposé entre ces deux jeux,

    caractérisé en ce que le filtre comporte

- un transformateur relié par son primaire en série aux premières connexions des deux jeux et par son secondaire en série aux deuxièmes connexions des deux jeux,
- un moyen pour prélever un signal de tension correspondant à un signal de courant global circulant sur une des connexions du premier jeu, et
- un circuit pour filtrer ce signal de tension, et produire un signal électrique,
- une bobine de couplage couplée au transformateur et alimentée par un signal de courant inducteur associé au signal électrique pour induire un flux magnétique dans ce transformateur.

L'invention sera mieux comprise à la lecture de la description qui suit et à l'examen des dessins qui l'accompagnent. Ces figures sont montrées à titre indicatif mais nullement limitatif de l'invention. Ces figure montrent:

- **-** Figure 1 : déjà décrite, une représentation de l'exploitation d'une bande fréquence avec une technologie ADSL ;
- **-** Figure 2 : déjà décrite, une représentation d'un réseau ADSL illustrant une séparation des signaux basse fréquence et haute fréquence ;
- **-** Figure 3 : une représentation d'une mise en oeuvre du dispositif de filtrage selon l'invention ;
- **-** Figure 4 : une représentation d'un premier circuit équivalent au dispositif de filtrage selon l'invention ;
- **-** Figure 5 : une représentation d'un deuxième circuit équivalent au dispositif de filtrage selon l'invention.

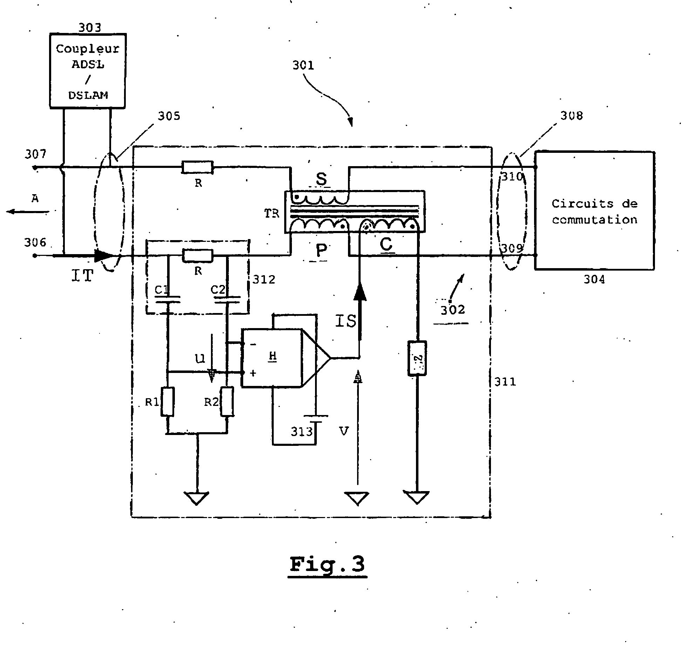

La figure 3 montre un dispositif 301 de filtrage installé sur une ligne 302 téléphonique entre un branchement d'un coupleur 303 ADSL à cette ligne 302 et un ensemble 304 de circuits de commutation. Ce coupleur ADSL ou DSLAM (pour Digital Subscriber Line Access Multiplexer en anglais) permet de réaliser un multiplexage de données destinées ou provenant d'un réseau Internet (non représenté). La flèche A indique que la ligne 302 se prolonge vers un abonné. De manière générale, le dispositif 301 est connecté à l'intérieur d'un central téléphonique, sur chaque ligne téléphonique reliant ce central à différents abonnés.

Le dispositif 301 comporte un premier jeu 305 de connexions reliées au coupleur 303 et à une ligne d'abonné. Ce premier jeu 305 comporte une première connexion 306 et une deuxième connexion 307. Le dispositif 301 comporte aussi un deuxième jeu 308 de connexions reliées à l'ensemble 304 de circuits de commutation. Ce deuxième jeu 308 comporte une première connexion 309 et une deuxième connexion 310.

Le dispositif 301 comporte un filtre 311 interposé entre ces deux jeux 305 et 308. Ce filtre 311 comporte notamment un transformateur TR relié par son primaire P en série aux premières connexions 306 et 309 des deux jeux 305 et 308, et par son secondaire S en série aux deuxièmes connexions 307 et 310 des deux jeux 305 et 308.

Le filtre 311 comporte aussi un circuit 312 pour prélever un signal de tension U correspondant à un signal d'un courant global IT circulant sur une des connexions 306 du premier jeu 305. De fait, ce circuit 312 est connecté en série avec les premières connexions 306 et 309. Le filtre 311 comporte aussi un filtre H actif qui est connecté aux bornes du circuit 312. En variante, le circuit 312 est connecté en série avec les deuxièmes connexions 307 et 310 et le filtre H actif est toujours connecté aux bornes de ce circuit 312.

Le filtre H actif filtre le signal de tension U, et produit un signal électrique de tension V. En général, le filtre H est un filtre actif galvaniquement isolé de la ligne 302.

Une bobine C de couplage est couplée au transformateur TR. Cette bobine C est alimentée par un courant inducteur IS associé au signal de électrique de tension V. Ce courant IS inducteur est le courant mesurable en sortie du filtre H. Le courant IS et le signal de tension V sont associés car ils sont tout deux observables en sortie du filtre H. Le courant inducteur IS induit un flux magnétique dans ce transformateur TR.

Plus précisément, le circuit 312 comporte une résistance R en série dans la première connexion 306 du premier jeu 305. Un signal de tension observable aux bornes de la résistance R est l'image du courant global IT circulant à travers les premières connexions 306 et 309 à un coefficient près. En variante, on pourrait obtenir une image du courant global IT en utilisant une bobine possédant une inductance de valeur particulière.

Le circuit 312 comporte aussi deux condensateurs C1 et C2 de découplage. Une première borne du condensateur C1 est reliée à une borne de la résistance R tandis que sa seconde borne est reliée à la borne d'entrée positive du filtre H actif. Une première borne du condensateur C2 est reliée à une autre borne de la résistance R tandis que sa seconde borne est reliée à la borne d'entrée négative du filtre H actif. Dans une réalisation particulière, les condensateurs C1 et C2 possèdent la même capacité. Ces condensateurs C1 et C2 permettent d'isoler le filtre H actif de la ligne 302.

Ainsi, le filtre H actif comporte une alimentation 313 électrique indépendante de la ligne 302 téléphonique. Cette alimentation 313 est une pile externe mais elle peut être aussi réalisée à partir d'une génératrice de 48V disponible du côté du central téléphonique. Le choix de l'alimentation dépend de besoins de l'utilisateur donnés dans un cahier des charges et d'une configuration d'un réseau électrique de puissance.

Par soucis de symétrie dans la structure du filtre 311, une deuxième résistance R est connectée en série avec les deuxièmes connexions 307 et 310. Cette symétrie permet d'éviter qu'un signal différentiel transmis par la ligne 302 ne se transforme en signal de mode commun qui serait rayonné.

Le primaire P et l'ensemble constitué par le secondaire S et la bobine de couplage C sont connectés de manière tête-bêche l'un par rapport à l'autre. On dit que deux bobines sont montées de manière tête-bêche lorsqu'une extrémité représentée par un point d'une première bobine est en regard de ou correspond à une extrémité opposée d'une deuxième bobine. En variante, on inverse les polarité de la bobine C de couplage. Le cas échéant, la fonction de transfert associée au filtre H actif possède un signe opposé par rapport à celui de la fonction du filtre H actif utilisé dans le montage où les bobines C et S sont montées de manière tête-bêche.

En général, la bobine C de couplage possède une faible valeur d'inductance. Cette faible valeur d'inductance permet de réduire la taille de cette bobine C tout en conservant un courant de saturation élevé. Cette faible valeur d'inductance permet en outre un bon comportement du filtre H actif lors de régimes transitoires. Ces régimes transitoires sont observables notamment au moment où la tension aux bornes des connexions de la ligne évolue, en raison de l'apparition d'un signal de sonnerie sur la ligne 302. Dans une réalisation particulière, le transformateur TR possède un primaire P, un secondaire S et une bobine C de couplage de très faible inductance qui permettent d'utiliser des composants du filtre 311 de faible encombrement, tout en maintenant des caractéristiques de ce filtre 311 inchangées.

Le filtre H actif peut être réalisé de différentes manières. En effet, le filtre H actif peut être un filtre analogique actif comportant un ou plusieurs amplificateurs, des inductances, des résistances et des capacités.

Le filtre H actif peut aussi être un filtre actif intégré comportant des capacités commutées. Ce filtre à capacité commutées est un filtre normalisé dont les valeurs des composants sont rangées à l'intérieur de tables.

Le filtre H actif peut aussi être un filtre numérique comportant un processeur de traitement de signal. Des convertisseurs analogique / numérique et numérique / analogique sont respectivement disposés à l'entrée et à la sortie du filtre H. Ce filtre H numérique permet une programmation par logiciel de sa fonction de transfert et offre ainsi la possibilité de modifier la caractéristique du filtre sans changer des composants du filtre 311.

Cette modification logicielle de la fonction de transfert est très utile pour adapter le filtre 311 à des lignes téléphoniques de pays différents comportant des impédances différentes. Autrement dit, grâce à un filtre H numérique, le filtre 311 peut être aisément configuré pour différents standards de lignes 302 téléphoniques.

Comme le filtre H actif est isolé de la ligne 302 et que sa tension d'alimentation est très inférieure aux tensions observables sur la ligne 302, il est possible de réaliser ce filtre H à partir de composants peu onéreux et compacts ne supportant que des potentiels peu élevés à leurs bornes d'entrée.

Des résistances R1 et R2 relient les bornes d'entrée positive et négative du filtre H actif à une masse du dispositif 301. Les bornes d'une impédance Z sont reliées à une borne de la bobine C de couplage et à une masse du dispositif 301. Cette impédance Z correspond à une impédance de sortie du filtre H actif.

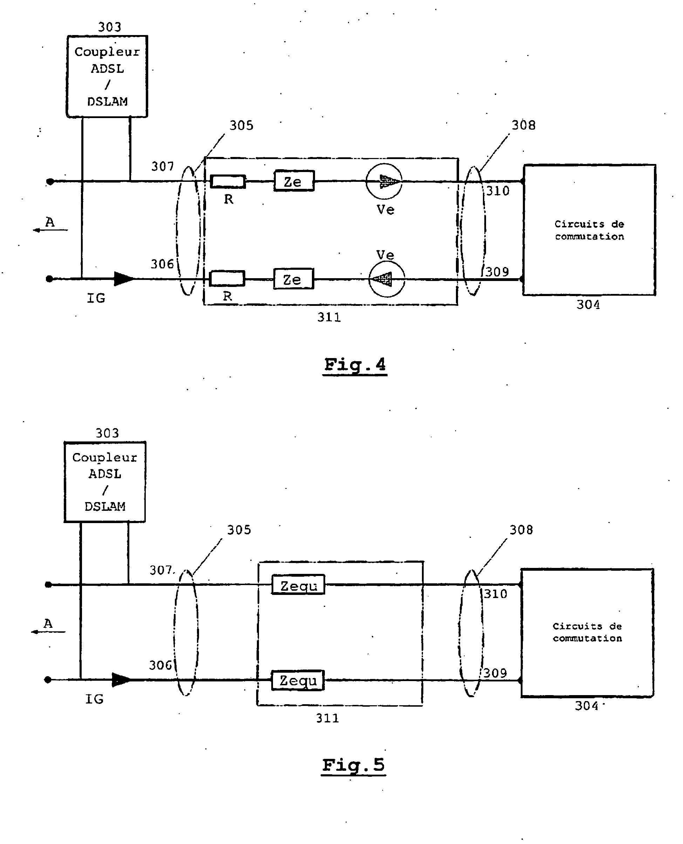

La figure 4 montre une représentation d'un schéma équivalent au schéma de la figure 1. Le transformateur TR est ici modélisé comme une source de tension pure VE avec une impédance ZE série placées sur chacune des deux connexions 306 et 307 du premier jeu 305. Chaque source VE et chaque impédance ZE est connectée en série avec une des résistance R de la figure 1. L'ensemble des sources VE, des impédances ZE et des circuits 303 de commutation est équivalent au filtre 311 connecté entre le coupleur 303 et l'ensemble 304 de circuits de commutation. Dans un exemple de réalisation, le rapport entre le primaire P et le secondaire S du transformateur TR vaut un.

Pour établir les formules suivantes, on considère que le couplage du transformateur TR est parfait. L'inductance du primaire P vaut 0.5 mH. L'inductance du secondaire S vaut 0.5 mH et l'inductance de la bobine de couplage vaut 1.0 mH.

Dans une réalisation particulière, les résistance R1 et R2 ont une même valeur et les condensateurs C1 et C2 possèdent la même capacité. Par ailleurs, la valeur de la résistance R est très inférieure à celle des résistances R1 et R2 afin d'éviter des pertes d'énergie.

On peut alors établir qu'en fonction d'une pulsation w d'un signal, la tension pure VE et l'inductance ZE varient de la manière suivante:

$$VE(w)=H(w)*(0.5*(L*j*w)/(Z+L*j*w))*(R1*C1*j*w)/(1+R1*C1*j*w)*(R*IG(w)) \text{ et}$$

$$ZE(w) = 0.5*(Z*L*j*w)/(Z+L*j*w)$$

où H(w) correspond à la fonction de transfert du filtre H actif.

L est la valeur d'une inductance pure du transformateur TR.

Z est la valeur de l'impédance série connectée à la bobine de couplage.

j est un nombre imaginaire.

Dans cette formule, R1 , C1 et IG(w) correspondent respectivement à la valeur de la résistance de la résistance R1, à la valeur de la capacité du condensateur C1 et à l'intensité du signal de courant IG.

La figure 5 montre une deuxième représentation d'un schéma équivalent au schéma la figure 3. Le filtre 311 peut être modélisé par une impédance ZEQU équivalente placée sur chacune des deux connexions 306 et 307 du premier jeu 305. Cette impédance ZEQU équivalente varie en fonction de la pulsation w d'un signal de la manière suivante:

$$ZEQU(w)=0.5*((L*j*w)/(Z+L*j*w))*(R*(R1*C1*j*w)/(1+R1*C1*j*w))*H(w)+R\ldots$$

$$\ldots+0.5*((Z*L*j*w)/(Z+L*j*w))$$

où H(w) correspond à la fonction de transfert du filtre H actif.

L est la valeur d'une inductance pure du transformateur TR.

Z est la valeur de l'impédance série connectée à la bobine de couplage.

j est un nombre imaginaire tel que j*j=-1.

Dans cette formule, R1 et C1 correspondent respectivement à la valeur de la résistance de la résistance R1 et à la valeur de la capacité du condensateur C1.

La figure 5 met en évidence le fait qu'à partir du filtre 311 connecté en parallèle avec les premières connexions 306 et 309, l'impédance globale de ce filtre 311 vue par la ligne 302 correspond à deux impédances équivalentes ZEQU connectées en série sur les deux connexions 306 et 307 du premier jeu 305. Ainsi, le filtre 311 de faible puissance qui ne serait pas adapté à une connexion en série sur les connexions du premier jeu 305, est équivalent à deux filtres identiques connectés chacun en série sur une des deux connexions 306 et 307. La faible puissance du filtre 311 utilisé permet de s'affranchir des contraintes de courant et de tension imposées par la ligne 302 et donc d'utiliser de petits composants peu encombrants pour le réaliser.

Bien entendu, le dispositif de filtrage selon l'invention peut être incorporé plus généralement sur tous les dispositifs séparateurs de signaux voix-données disposés sur des supports xDSL susceptibles de transmettre des signaux téléphoniques basse fréquence et des signaux xDSL. La famille de technologies xDSL englobe la technologie ADSL, la technologie VDSL (Very High data rate Digital Suscriber Line, pour ligne d'abonné à très haut débit), ou encore les technologies HDSL ou SDSL. Enfin, ce dispositif peut également être appliqué au filtrage de signaux de données sur courants porteurs.

## Revendications

1. Dispositif (301) de filtrage installé, dans un central, sur une ligne (302) téléphonique entre un branchement d'un coupleur ADSL (303) à cette ligne et un ensemble (304) de circuits de commutation de ce central, comprenant

   - un premier jeu (305) de connexions reliées au coupleur (303) et à une ligne d'abonné et,
   - un deuxième jeu (308) de connexions reliées à l'ensemble (304) de circuits de commutation,
   - un filtre (311) interposé entre ces deux jeux (305, 308),
   - un transformateur (TR) relié par son primaire (P) en série aux premières connexions (306, 309) des deux jeux (305, 308) et par son secondaire (S) en série aux deuxièmes connexions (307, 310) des deux jeux (305, 308),

   **caractérisé en ce que** le filtre (311) comporte en outre :

   - un moyen (312) pour prélever un signal de tension (U) correspondant à un signal de courant global (IT) circulant sur une des connexions (306) du premier jeu (305), et
   - un circuit (H) pour filtrer ce signal de tension (U), et produire un signal électrique (V),
   - une bobine (C) de couplage couplée au transformateur (TR) et alimentée par un signal de courant inducteur (IS) associé au signal électrique (V) pour induire un flux dans ce transformateur (TR).

2. Dispositif (301) selon la revendication 1, **caractérisé en ce que** le moyen (312) pour prélever un signal d'un courant circulant sur une des connexions du premier jeu comporte une résistance (R) en série dans une connexion (306, 307) du premier jeu (305) et deux condensateurs (C1,C2) de découplage connectés d'une part aux bornes de la résistance (R) et d'autre part à des entrées du circuit (H) pour traiter.

3. Dispositif (301) selon la revendication 2 **caractérisé en ce que** le circuit (H) pour traiter comporte une alimentation (313) électrique indépendante de la ligne (302).

4. Dispositif (301) selon l'une des revendications 1 à 3, **caractérisé en ce que** le primaire (P) et l'ensemble constitué par le secondaire (S) et la bobine (C) de couplage sont connectés de manière tête-bêche l'un par rapport à l'autre.

5. Dispositif (301) selon l'une des revendications 1 à 4, **caractérisé en ce que** le circuit (H) pour traiter est un filtre actif.

6. Dispositif (301) selon la revendication 5, **caractérisé en ce que** le filtre actif est un filtre analogique actif comportant un ou plusieurs amplificateurs, des inductances, des résistances et des capacités.

7. Dispositif (301) selon la revendication 5, **caractérisé en ce que** le filtre actif est un filtre actif intégré comportant des capacités commutées.

8. Dispositif (301) selon la revendication 5, **caractérisé en ce que** le filtre actif est un filtre numérique comportant un processeur de traitement de signal, ce processeur étant connecté à un convertisseur analogique numérique et à un convertisseur numérique analogique respectivement situés à son entrée et à sa sortie.

9. Dispositif (301) selon l'une des revendications 5 à 8, **caractérisé en ce qu'**il est capable de mettre en oeuvre sa fonction de transfert, telle que le transformateur peut être modélisé comme une source (VE) de tension pure avec une impédance (ZE) série placée sur chacune des deux connexions (306, 307) du premier jeu (305) avec :

$$VE(w)=H(w)*(0.5*(L*j*w)/(Z+L*j*w))*(R1*C1*j*w)/(1+R1*C1*j*w)*(R*IG(w)) \text{ et}$$
$$ZE(w) = 0.5*(Z*L*j*w)/(Z+L*j*w)$$

où H(w) correspond à la fonction de transfert du filtre H actif,
L est la valeur d'une inductance pure du transformateur TR,
Z est la valeur d'une impédance série connectée à la bobine de couplage,
j est un nombre imaginaire,
R1, C1 et IG(w) correspondent respectivement à la valeur de la résistance de la résistance R1, à la valeur de la capacité du condensateur C1 et à l'intensité du signal de courant IG,

10. Dispositif (301) selon l'une des revendication 1 à 9 **caractérisé en ce que** la résistance (R) du moyen pour prélever le signal de courant (IT) comporte une valeur très inférieure à celle des résistances (R1, R2) reliant les bornes d'entrée du circuit (H) pour traiter à une masse.

**Claims**

1. Filtering device (301) installed, in a telephone exchange, on a telephone line (302) between a branching of an ADSL diplexer (303) to the line and an assembly (304) of switching circuits of the telephone exchange, comprising:

   - a first set (305) of connections connected to the diplexer (303) and to a subscriber line, and
   - a second set (308) of connections connected to the assembly (304) of switching circuits,
   - a filter (311) interposed between the two sets (305, 308),
   - a transformer (TR) connected in series by its primary (P) to the first connections (306, 309) of the two sets (305, 308) and in series by its secondary (S) to the second connections (307, 310) of the two sets (305, 308),

   **characterized in that** the filter (311) additionally comprises:

   - a means (312) for picking up a voltage signal (U) corresponding to an overall current signal (IT) flowing on one of the connections (306) of the first set (305), and
   - a circuit (H) for filtering the voltage signal (U), and for producing an electrical signal (V),
   - a coupling coil (C) coupled to the transformer (TR) and fed by a main current signal (IS) associated with the electrical signal (V) to induce a flow in the transformer (TR).

2. Device (301) according to claim 1, **characterized in that** the means (312) for picking up a signal of a current flowing on one of the connections of the first set comprises a series resistance (R) in a connection (306, 307) of the first set (305) and two decoupling capacitors (C1, C2) connected on the one hand to the terminals of the resistance (R) and on the other hand to inputs of the circuit (H) for processing.

3. Device (301) according to claim 2, **characterized in that** the circuit (H) for processing comprises an electrical supply (313) independent of the line (302).

4. Device (301) according to any one of claims 1 to 3, **characterized in that** the primary (P) and the assembly formed by the secondary (S) and the coupling coil (C) are connected head-to-tail with respect to each other.

5. Device (301) according to any one of claims 1 to 4, **characterized in that** the circuit (H) for processing is an active filter.

6. Device (301) according to claim 5, **characterized in that** the active filter is an active analog filter comprising one or more amplifiers, inductances, resistances and capacitances.

7. Device (301) according to claim 5, **characterized in that** the active filter is an integrated active filter comprising switched capacitances.

8. Device (301) according to claim 5, **characterized in that** the active filter is a digital filter comprising a signal processing processor, the processor being connected to an analog/digital converter and to a digital/analog converter respectively located at its input and at its output.

9. Device (301) according to any one of claims 5 to 8, **characterized in that** it is capable of performing its transfer function, such that the transformer can be modelled as a pure voltage source (VE) with a series impedance (ZE) placed on each of the two connections (306, 307) of the first set (305) with:

$$VE(w) \approx H(w)*(0.5*(L*j*w)/(Z+L*j*w))*(R1*C1*j*w)/(1+R1*C1*j*w)*(R*IG(w)) \text{ and}$$

$$ZE(w) = 0.5*(Z*L*j*w)/(Z+L*j*w)$$

where H(w) corresponds to the transfer function of the active filter H,
L is the value of a pure inductance of the transformer TR,
Z is the value of a series impedance connected to the coupling coil,
j is an imaginary number,
R1, C1 and IG(w) correspond respectively to the value of the resistance of the resistor R1, to the value of the capacitance of the capacitor C1 and to the intensity of the current signal IG.

10. Device (301) according to any one of claims 1 to 9, **characterized in that** the resistance (R) of the means for picking up the current signal (IT) has a value far below that of the resistors (R1, R2) connecting to an earth the input terminals of the circuit (H) for processing.


**Patentansprüche**

1. Filtervorrichtung (301), die in einer Zentrale an einer Telefonleitung (302) zwischen einem ADSL-Koppleranschluss (303) an dieser Leitung und einem Aufbau (304) von Schaltkreisen dieser Zentrale installiert ist, mit

   - einem ersten Verbindungssatz (305), der mit dem Koppler (303) und einer Teilnehmerleitung verbunden ist,
   - einem zweiten Verbindungssatz (308), der mit dem Aufbau (304) der Schaltkreise verbunden ist,
   - einem Filter (311), der zwischen diesen zwei Sätzen (305, 308) angeordnet ist,
   - einem Transformator (TR), der über seine Primärseite (P) in Serie mit den ersten Verbindungen (306, 309) der zwei Sätze (305, 308) und über seine Sekundärseite (S) in Serie mit den zweiten Verbindungen (307, 310) der zwei Sätze (305, 308) verbunden ist,

   **dadurch gekennzeichnet, dass** das Filter (311) ferner aufweist:

   - ein Mittel (312) zum Abgreifen eines Spannungssignals (U), welches einem Globalstromsignal (IT) entspricht, das in einer der Verbindungen (306) des ersten Satzes (305) zirkuliert, und
   - einen Stromkreis (H) zum Filtern dieses Spannungssignals (U) und zum Erzeugen eines elektrischen Signals (V),
   - eine Kopplungsspule (C), die an den Transformator (TR) gekoppelt und durch ein Induktionsstromsignal (IS) gespeist wird, das dem elektrischen Signal (V) zugeordnet ist, um in diesem Transformator (TR) einen Strom zu induzieren.

2. Vorrichtung (301) nach Anspruch 1, **dadurch gekennzeichnet, dass** das Mittel (312) zum Abgreifen eines Signals eines in einer der Verbindungen des ersten Satzes zirkulierenden Stromes einen Widerstand (R) in Serie in einer Verbindung (306, 307) des ersten Satzes (305) und zwei Entkopplungskondensatoren (C1, C2) aufweist, die einerseits mit Klemmen für den Widerstand (R) und andererseits mit Zugängen des Stromkreises (H) für die Verarbeitung verbunden sind.

3. Vorrichtung (301) nach Anspruch 2, **dadurch gekennzeichnet, dass** der Stromkreis (H) für die Verarbeitung eine elektrische Versorgung (313) aufweist, die von der Leitung (302) unabhängig ist.

4. Vorrichtung (301) nach einem der Ansprüche 1 bis 3, **dadurch gekennzeichnet, dass** die Primärseite (P) und der durch die Sekundärseite (S) und die Kopplungsspule (C) gebildete Aufbau umgekehrt miteinander verbunden sind.

5. Vorrichtung (301) nach einem der Ansprüche 1 bis 4, **dadurch gekennzeichnet, dass** der Stromkreis zur Behandlung (H) ein Aktivfilter ist.

6. Vorrichtung (301) nach Anspruch 5, **dadurch gekennzeichnet, dass** das Aktivfilter ein analoges Aktivfilter ist, das einen oder mehrere Verstärker, Induktivitäten, Widerstände und Kapazitäten aufweist.

7. Vorrichtung (301) nach Anspruch 5, **dadurch gekennzeichnet, dass** das Aktivfilter ein integriertes Aktivfilter ist, das kommutierte Kapazitäten aufweist.

8. Vorrichtung (301) nach Anspruch 5, **dadurch gekennzeichnet, dass** das Aktivfilter ein numerisches Filter ist, das einen Prozessor zur Signalverarbeitung aufweist, wobei dieser Prozessor mit Analog/Digital-Wandler und Digital/Analog-Wandler verbunden ist, die an seinem Eingang bzw. seinem Ausgang liegen.

9. Vorrichtung (301) nach einem der Ansprüche 5 bis 8, **dadurch gekennzeichnet, dass** sie in der Lage ist, ihre Übertragungsfunktion derart durchzuführen, dass der Transformator wie eine Quelle (VE) für reine Spannung mit einer Impedanzserie (ZE) moduliert werden kann, die auf jeder der zwei Verbindungen (306, 307) des ersten Satzes (305) platziert ist, mit:

$$VE(w) = H(w)*(0,5*(L*j*w)/(Z+L*j*w))*(R1*C1*j*w)/(1+R1*C1*j*w)*(R*IG)$$

$(w))$ und

$$ZE(w) = 0,5*(Z*L*j*w)/(Z+L*j*w),$$

wobei H(w) der Funktion der Übertragung des Aktivfilters (H) entspricht,
L der Wert einer reinen Induktivität des Transformators (TR) ist,
Z der Wert einer Impedanzserie ist, die mit der Kopplungsspule verbunden ist,
j eine imaginäre Zahl ist,
R1, C1 und IG(w) jeweils dem Wert des Widerstandes R1, dem Wert der Kapazität des Kondensators C1 und der Intensität des Stromsignales IG entsprechen.

10. Vorrichtung nach einem der Ansprüche 1 bis 9, **dadurch gekennzeichnet, dass** der Widerstand (R) des Mittels zum Abgreifen des Stromsignales (IT) einen Wert aufweist, der wesentlich niedriger als der der Widerstände (R1, R2) ist, welche die Einlassklemmen des zu behandelnden Stromkreises (H) zum Verarbeiten mit einer Masse verbinden.

## Fig. 1

Spectre de puissance

100

102

103

104    105

Spectre vocal

4khz   32khz

4,3khz

106

106

1,1Mhz

101

Echelle des frequences

## Fig. 2

208   207   201   210   202   205   206

204

HF

200

L

Filtre à aiguillage

Filtre à aiguillage

D S L A M

Internet

BF

211

203

209

**Fig.3**

**Fig.4**

**Fig.5**

**RÉFÉRENCES CITÉES DANS LA DESCRIPTION**

**Documents brevets cités dans la description**

- WO 0048314 A
- WO 9940716 A